# EUROPÄISCHE PATENTSCHRIFT

(11) **EP 1 818 159 B1**
(45) Veröffentlichungstag und Bekanntmachung des Hinweises auf die Patenterteilung: **30.11.2011**
(21) Anmeldenummer: 07001357.8
(22) Anmeldetag: 23.01.2007
(51) Int. Cl.: B29C 51/46

(54) **Verfahren zum Optimieren der Taktzeit einer Thermoformmaschine zum Tiefziehen von Teilen aus einer erwärmten thermoplastischen Folienbahn**
Method for optimizing the cycle time of a thermoforming machine for deep-drawing parts from a heated thermoplastic foil
Procédé pour optimiser la cadence d'une machine de thermoformage pour thermoformer des objets à partir d'une feuille thermoplastique préchauffée

(30) Priorität: 10.02.2006 DE 102006006176
(43) Veröffentlichungstag der Anmeldung: 15.08.2007
(73) Patentinhaber: ILLIG Maschinenbau GmbH & Co. KG, 74081 Heilbronn (DE)
(72) Erfinder: Kärcher, Gottfried, 74081 Heilbronn (DE); Kaiser, Ralf, 74081 Heilbronn (DE)

(56) Entgegenhaltungen:
- DE-B3-102005 044 537
- DE-C1- 10 209 650
- US-A- 4 933 126
- US-A- 5 847 961
- "STEEL RULE DIES ENSURE QUALITY" EUROPEAN PLASTICS NEWS, EMAP BUSINESS PUBLICATION, LONDON, GB, Bd. 30, Nr. 4, 1. Mai 2003 (2003-05-01), Seite 33, XP001158100 ISSN: 0306-3534

## Beschreibung

Die Erfindung betrifft ein Verfahren zum Optimieren der Taktzeit einer Thermoformmaschine zum Tiefziehen von Teilen aus einer erwärmten thermoplastischen Folienbahn nach der Gattung des Hauptanspruches.

Aus der DE 101 52 891 ist eine gattungsbildende Vorrichtung bekannt, die mehrere Stationen aufweist. Eine Transporteinrichtung führt die Folienbahn durch alle Stationen, bis die geformten Teile aus der Folienbahn ausgebrochen und gestapelt sind. Danach wird das Restgitter aufgewickelt oder bekannterweise auch direkt einer Mahleinrichtung zugeführt. Vorrichtungen dieser Art weisen mindestens eine Formstation mit einem zweiteiligen Formwerkzeug auf, dessen Hälften auf je einem Formtisch aufsitzen, von denen mindestens einer höhenverschiebbar ist. Für unterschiedliche Verfahrensabläufe sind je nach Erfordernis höhenverschiebbare Spannrahmen vorgesehen - oben und/oder unten. Die Formstation kann als kombiniert formende und stanzende Station ausgebildet sein, das Ausstanzen kann aber auch wie dargestellt in einer separaten Station erfolgen mit höhenverschiebbaren Stanzwerkzeugen. Je nach Teilegestalt müssen dazu zwei Stanztische verschiebbar sein.
Bekannterweise laufen die einzelnen Bewegungen als Folgesteuerung ab. So fährt die Transporteinrichtung einen Vorschubschritt und transportiert einen erwärmten Abschnitt der Folienbahn in die Formstation. Danach schließen die Spannrahmen und wenn diese ihre Endlage erreicht haben, starten die zu bewegenden Formtische. Die Endlagen der bewegten Einrichtungen werden durch Sensoren erfasst und der Steuerung gemeldet, die daraufhin den Befehl zur nachfolgenden Bewegung auslöst. Nachteilig bei dieser Folgesteuerung ist es, dass Totzeiten entstehen, die die Taktzeit insgesamt verlängern. Es ist bekannt, bei der Verwendung eines Servomotors als Antrieb für die Transporteinrichtung für die Folienbahn Bewegungen der Spannrahmen und/oder der Formtische bereits zu starten, bevor die Vorschubbewegung der Folienbahn zu Ende ist. Dies erfolgt auf manuelle Weise durch Vorgabe eines Wertes, der einem Restweg der Folienbahn entspricht. Über den Geber des Servoantriebs kann dieser Wert von der Steuerung errechnet werden. Diese Einstellung und Ermittlung ist jedoch mühsam und stellt kein Optimum der möglichen Überschneidungen dar.
Weiterhin ist es bekannt, gattungsgemäße Vorrichtungen mit einer Berechnung einer sogenannten Maschinengrundeinstellung zu versehen. Durch Vorgabe von Folienmaterial, Foliendicke, Vorschub, Formteilhöhe errechnet sich die Steuerung der Vorrichtung gewisse Daten wie Heizungseinstellung, Abstand der Stationen zueinander, Mindesthübe der Formtische, jedoch immer auf der Basis einer dann ablaufenden Folgesteuerung, also ohne überschneidende Bewegungen. Eine optimal mögliche Taktzeit wird dadurch nicht erreicht.

Aus der DE 102 09 650 ist es bekannt, die mindestens erforderlichen Fahrwege einzelner Einrichtungen zu ermitteln und festzulegen anhand der Abmessungen der tiefgezogenen und zu stapelnden Produkte. Es werden folglich Fahrwege optimiert, was sich nicht zwangsläufig auf die Taktzeit auswirkt. Denn es ist erforderlich, innerhalb dieses Fahrweges nicht nur zu starten, sondern auch wieder zu halten. Durch das Verzögern beim Anhalten verlängert sich die Zeit bis zum Stillstand gegenüber der Zeit zum Erreichen dieses Haltepunktes, wenn man über ihn mit voller Geschwindigkeit hinausfährt und erst später bremst. Auch ist es nicht immer sinnvoll, je nach Antriebsart der bewegten Einrichtungen, in jeder Position anzuhalten und daraus zu starten.

In einem Artikel der Zeitschrift "European Plastics News" vom 1. Mai 2003 wird eine Thermoformmaschine gezeigt, die eine rechnergestützte Grundeinstellung der Maschinen-Einstelldaten aufweist. Diese Grundeinstellung schließt eine Optimierung der Tischfahrwege ein. Nach Eingabe von Folienart, -breite, -dicke, Vorschub, Höhe des Formteils und dem gewünschten Ablaufprogramm wird von der Steuerung eine Grundeinstellung für die Einrichtungen der Maschine und für die Termperatureinstellung der Heizungen ermittelt.

Der Erfindung liegt die Aufgabe zugrunde, bei einer Thermoformmaschine die Taktzeit zu optimieren in der Weise, dass Totzeiten vermieden werden.

Gelöst ist diese Aufgabe durch ein Verfahren zum Optimieren der Taktzeit einer Thermoformmaschine mit den im Kennzeichen des Hauptanspruches angegebenen Maßnahmen. In Unteransprüchen sind vorteilhafte Weiterbildungen angegeben. Die Erfindung geht aus von der Erkenntnis, dass anhand der Geometrie der tiefgezogenen Formteile Bewegungen von Einrichtungen (Transporteinrichtung, Formtische, Spannrahmen, Stanztische, Stapeleinrichtungen) so überschneidend stattfinden können, dass keine Kollision mit den Formteilen stattfindet, aber doch so früh wie möglich diese Bewegungen gestartet werden. Dabei werden die Fahrgeschwindigkeiten, ggf. die Beschleunigungen und die Fahrwege entsprechender bewegter Einrichtungen in die Berechnung mit einbezogen.

Ausführungsbeispiele der Erfindung sind anhand der schematischen Zeichnungen näher beschrieben. Es zeigen:
- Figur 1:: eine Seitenansicht der Thermoformmaschine.
- Figur 2:: ein Ablaufdiagramm der bewegten Einrichtungen sowie der Druckluftzufuhr und des Vakuumaufbaus in der Formstation ohne angetriebene Spannrahmen.
- Figur 3 - 5 :: einen Querschnitt durch die Formstation ohne angetriebene Spannrahmen in verschiedenen Phasen des Formvorgangs.
- Figur 6: ein Ablaufdiagramm der bewegten Einrichtungen der Formstation mit angetriebenen Spannrahmen.
- Figur 7 - 11: einen Querschnitt durch die Formstation mit angetriebenen Spannrahmen in verschiedenen Phasen des Formvorgangs.

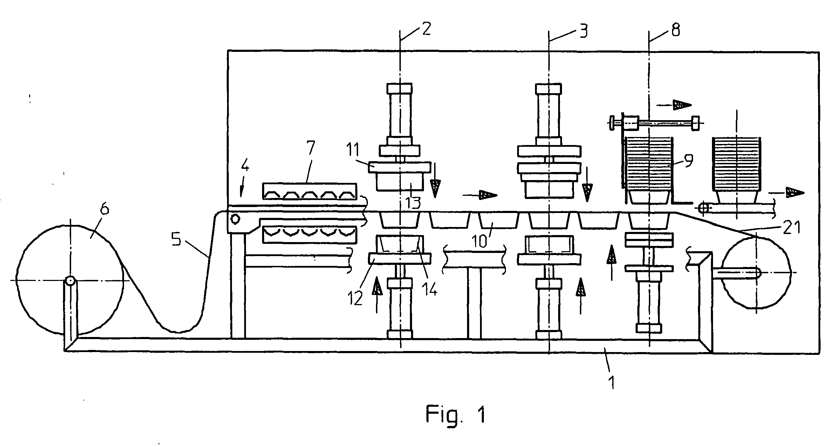

Das Verfahren zum Optimieren der Taktzeit findet Anwendung bei einer Thermoformmaschine, wie sie beispielsweise in Figur 1 dargestellt ist. Diese besteht aus einem Gestell 1, einer Formstation 2, einer Stanzstation 3 und einer Transporteinrichtung 4 zum intermittierenden Transport einer Folienbahn 5 durch die Thermoformmaschine. Falls diese Folienbahn 5 von einer Rolle 6 abgewickelt wird, ist eine Heizeinrichtung 7 zum Erwärmen der Folienbahn 5 vorgesehen. Wird die Folienbahn 5 direkt von einem Extruder zugeführt, kann ggf. auf diese Heizeinrichtung 7 verzichtet werden. Der Stanzstation 3 ist eine Stapelstation 8 nachgeordnet zum Bilden von Behälterstapeln 9. Die Restfolie 21 wird aufgewickelt oder einer Mühle zugeführt. Es sind aber auch andere Gestaltungen der Thermoformmaschine bekannt, um die aus der Folienbahn 5 ausgestanzten Formteile 10 Nachbearbeitungsstationen, z. B. über ein Transportband, zuzuführen. Auch können zwischen Formstation 2 und Stanzstation 3 eine Lochstanzeinrichtung oder eine Fülleinrichtung und eine Siegelstation zum Herstellen gefüllter und versiegelter Formteile 10 angeordnet sein. Es liegt dann eine zur Verpackungsmaschine erweiterte Thermoformmaschine vor. Ferner kann das Verfahren angewendet werden bei einer Thermoformmaschine, bei der die Formstation 2 auch Scheideinrichtungen zum Ausschneiden der Formteile 10 beinhaltet, die dann in der Folienbahn 5 hängend der Stapelstation 8 oder einer Ausbrechstation zugeführt werden.

Die Transporteinrichtung 4 für die Folienbahn 5 besteht aus zwei umlaufenden Transportketten mit Spitzlaschen oder anderen Greifeinrichtungen, z. B. Kluppen, die die Folienbahn 5 durchdringen oder festklemmen und arbeitet intermittierend.

In der Regel bestimmt der Formprozess in der Formstation 2 die Taktzeit, die anderen Verfahrensabläufe zum nachgegelagerten Stanzen und Stapeln sind während dieser Zeit meist durchzuführen, doch kann im Sonderfall auch einer dieser Abläufe die Taktzeit bestimmen, sodass eine Optimierung dort vorgenommen werden sollte, um die Taktzeit der gesamten Thermoformmaschine positiv zu beeinflussen. Nachfolgend wird deshalb das Verfahren zunächst anhand der Optimierung der Abläufe in der Formstation 2 beschrieben.

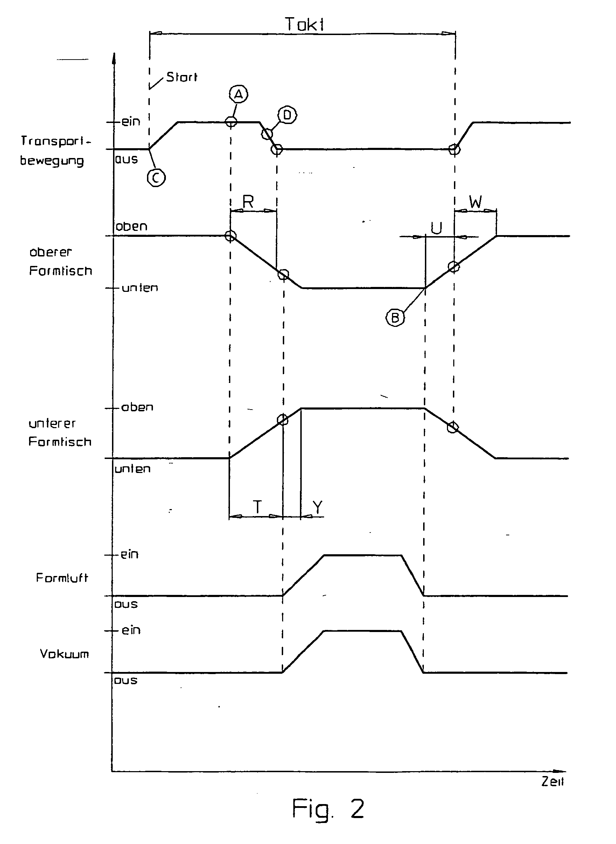

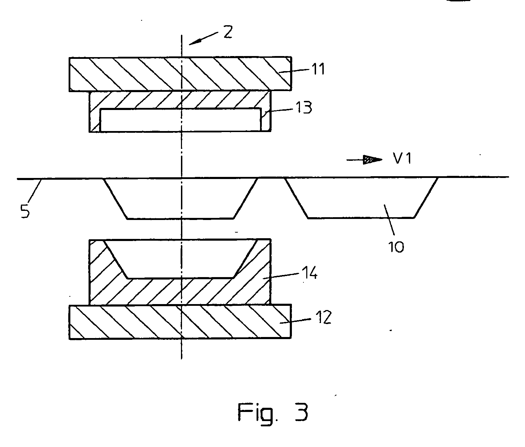

Beispielhaft wird dabei zunächst von einem einfachen Formprogramm mit einem beweglichen oberen Formtisch 11, der ein Oberwerkzeug 13 trägt, einem beweglichen unteren Formtisch 12, der ein Unterwerkzeug 14 trägt, Druckluftzufuhr am Oberwerkzeug 13 und Vakuumunterstützung am Unterwerkzeug 14 ausgegangen, dessen Ablaufdiagramm in Figur 2 dargestellt ist. Ein Takt beginnt (Ausgangslage Figur 3 stellt den Zustand nach einem vorherigen STOP der Automatik der Thermoformmaschine ohne Transportschritt dar) mit einem intermittierenden Transportschritt der Transporteinrichtung 4, um einen erwärmten Abschnitt der Folienbahn 5 in die Formstation 2 zu transportieren und einen Nutzen tiefgezogener Formteile 10 weiterzutransportieren. Noch bevor der Transportschritt beendet ist - zum Zeitpunkt A - (siehe Figur 2) beginnen die Formtische 11, 12 mit ihrer Fahrbewegung. Sie endet später als das Ende des Folientransportes. Während der Zeit R findet folglich eine Überschneidung der Bewegungen von Transporteinrichtung 4 und den Formtischen 11, 12 statt.

In besonderer Ausbildung des Verfahrens wird das Zuschalten der Formluft und/oder das Zuschalten des Vakuums um die Zeit T versetzt zum Beginn der Fahrbewegung der Formtische 11, 12 gestartet, und zwar bevor diese Fahrbewegungen zu Ende sind. Damit werden Schaltverzögerungen der Ventile kompensiert und Druckluft/Vakuum stehen sofort bei geschlossenen Formtischen 11, 12 in den Werkzeugen 13, 14 zum Tiefziehen der Formteile 10 an. Während der Zeit Y findet folglich eine Überschneidung von Formluftzufuhr/Vakuumzufuhr und Schließbewegung der Formtische 11, 12 statt.

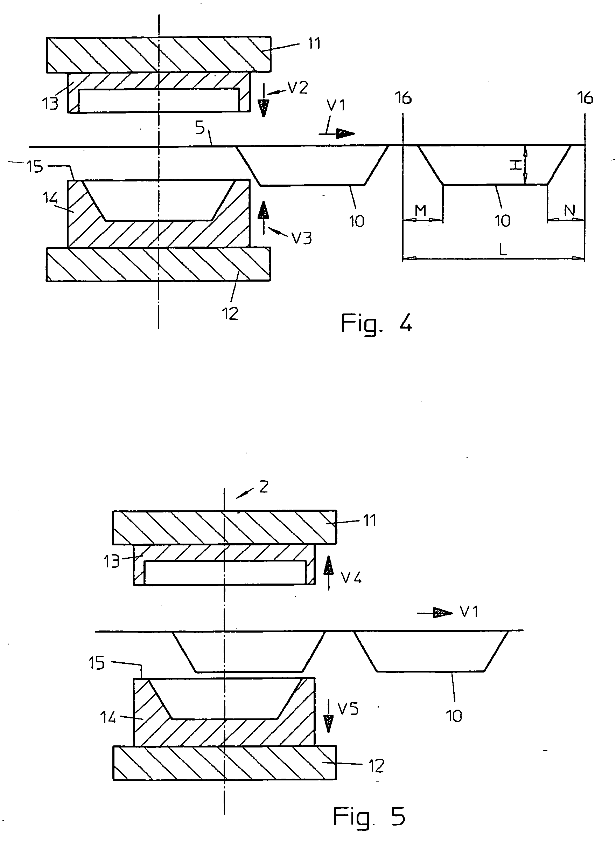

Nach beendetem Formprozess und genügendem Abkühlen der Formteile 10 öffnen die Formtische 11, 12 nach einer vorgegebenen Formzeit zum Zeitpunkt B und fahren in Ausgangslage. Der nächste Transportschritt der Transporteinrichtung 4 wird jetzt bereits vor Beendigung dieser Formtischbewegungen gestartet, und zwar nach der Zeit U. Während der Zeit W findet folglich eine Überschneidung der Bewegungen von Transporteinrichtung 4 und von den Formtischen 11, 12 statt.
Um den Bewegungsablauf dieses Taktes zu fahren, benötigt die Steuerung der Thermoformmaschine Werte, um die Überschneidungen während der Zeiten R und W herbeiführen zu können. Diese Überschneidungen R und W sind einerseits abhängig von der Geometrie der Formteile 10, andererseits von den Fahrgeschwindigkeiten der Transporteinrichtung 4 und der Formtische 11, 12. Die Erstreckung der Zeit T wird bestimmt von der Schaltzeit der Ventile für Druckluft und Vakuum. Die Auswirkung der Geometrie der Formteile 10 ist in den Figuren 3 bis 5 dargestellt. Figur 3 zeigt die Ausgangslage zum Zeitpunkt C (siehe Diagramm Figur 2). Der zuletzt geformte und sich noch in der Formstation 2 befindliche Nutzen wird jetzt aus der Formstation 2 mit der Transportgeschwindigkeit V1 heraustransportiert. Zum Zeitpunkt A startet die Bewegung der Formtische 11, 12 mit der Schließgeschwindigkeit V2, V3. Die Figur 4 zeigt die Situation etwa zum Zeitpunkt D (siehe Diagramm Figur 2). Eine optimale Einstellung des Bewegungsablaufs von Transporteinrichtung 4 und den Formtischen 11, 12 liegt vor, wenn die in Figur 4 gezeigte Stellung erreicht wird. Die Kante 15 des Unterwerkzeuges 14 bewegt sich knapp am Formteil 10 entlang, ohne es zu berühren und der Transport der Folienbahn 5 mit den eingeformten Formteilen 10 ist beendet, bevor die Formtische 11, 12 ihre Endlage erreichen.

Die Berechnung des Zeitpunktes A und damit des Wertes R für die Überschneidung der Bewegungen Transporteinrichtung 4 - Formtische 11, 12 erfolgt mathematisch durch Einbeziehung von ausgewählten und beeinflussenden Maßen des Formteils 10 - insbesondere der Höhe K, des Vorschubmaßes L und der Abstände M, N der Wandung des Formteils 10 zu der Außenkante 16 des Nutzens in Vorschubrichtung. In die Berechnung gehen ferner die Transportgeschwindigkeit V1 der Transporteinrichtung 4 ein, die Schließgeschwindigkeit V2 des oberen Formtisches 11, die Schließgeschwindigkeit V3 des unteren Formtisches 12 und die Fahrwege der Formtische 11, 12. Die Geometriewerte des Formteils 10 werden individuell gemäß des Verfahrens in ein Rechenprogramm eingegeben, das den optimalen Wert für die Überschneidung R berechnet. Feststehende maschinenbezogene Werte für die Fahrwege und die Fahrgeschwindigkeiten V1 - V3 werden nur einmal ins Programm eingegeben und nur bei Bedarf im Programm verändert. Die zur Erzielung dieser Überschneidung R erforderlichen berechneten Werte werden dann in die Steuerung der Thermoformmaschine eingegeben und dort gespeichert.
Auf gleiche Weise erfolgt anhand dieser Geometriedaten K, L, N des Formteils 10 unter Einbeziehung der fixen Werte der Transportgeschwindigkeit V1, der Öffnungsgeschwindigkeit V4 des oberen Formtisches 11 und der Öffnungsgeschwindigkeit V5 des unteren Formtisches 12 die Berechnung der Überschneidung W der Bewegungen von Transporteinrichtung 4 und der Öffnungsbewegungen der Formtische 11, 12, also der Zeit, in der bereits während des Öffnens der Formtische 11, 12 eine Austransportbewegung der Formteile 10 aus der Formstation 2 erfolgt. Es wird also nicht gewartet, bis die Formtische 11, 12 ganz auseinander gefahren sind. Auf diese Weise wird erzielt, dass, wie aus Figur 5 ersichtlich, das Formteil 10 möglichst knapp an der Kante 15 des Unterwerkzeugs 14 vorbeigeführt wird.

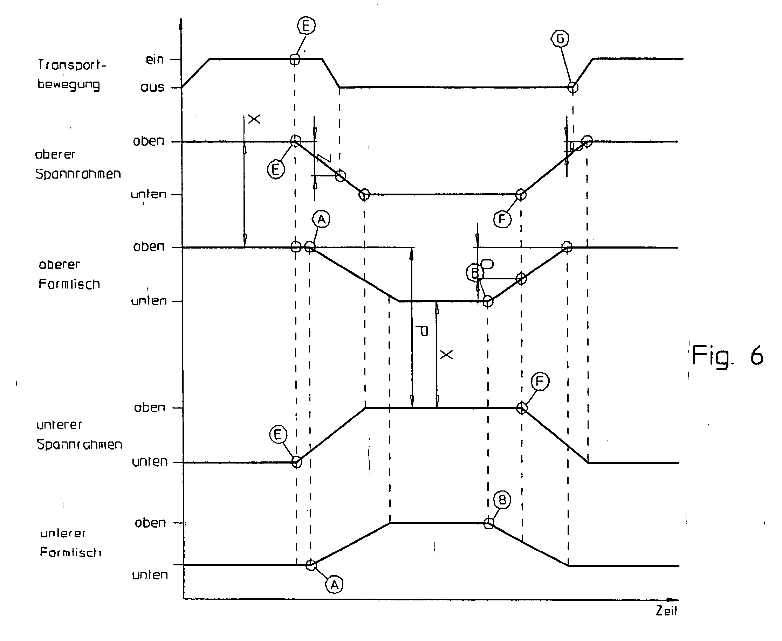

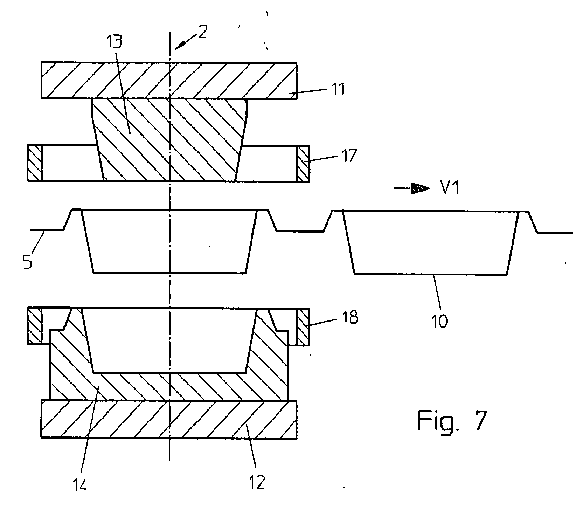

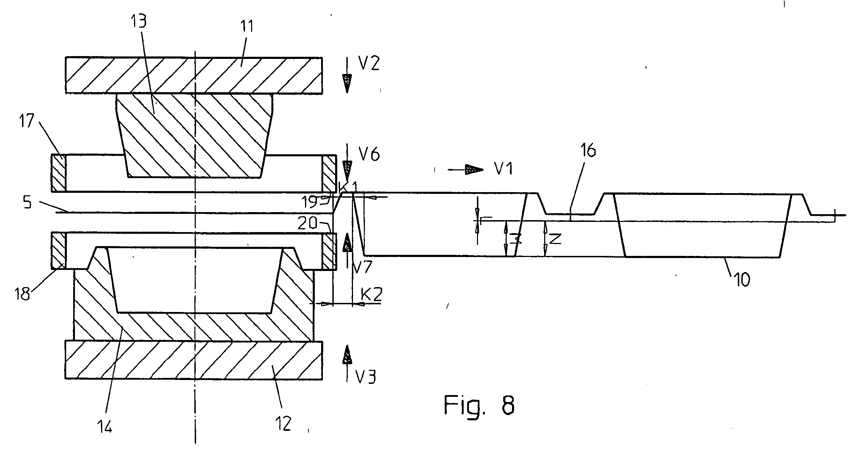

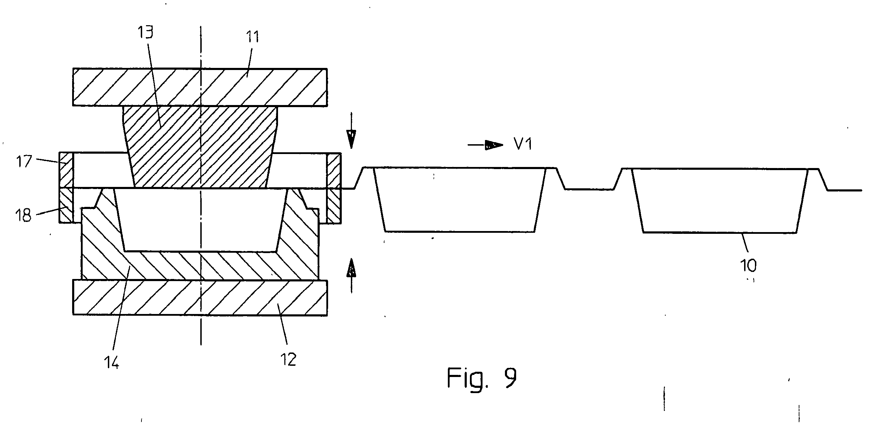

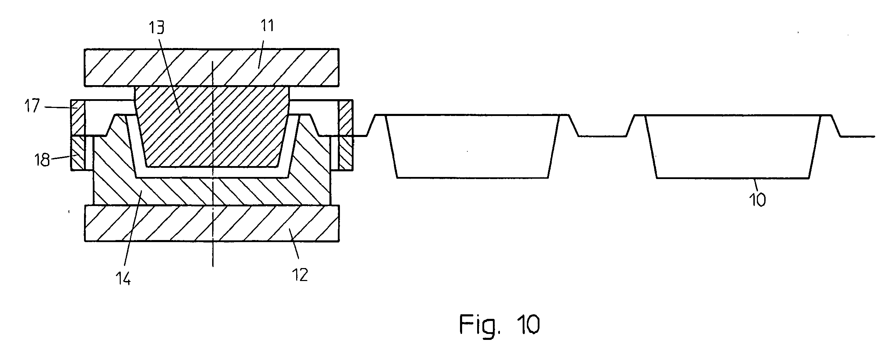

Falls in der Formstation 2 außer den beiden Formtischen 11, 12 auch höhenbewegliche Spannrahmen 17, 18 mit eigenen, nicht dargestellten Betätigungseinrichtungen vorgesehen sind, können auch hier Überschneidungen berechnet und zu einem optimalen Bewegungsablauf herangezogen werden. Im Ablaufdiagramm Figur 6 sind die Bewegungen von Transporteinrichtung 4, den Formtischen 11, 12 und den beiden Spannrahmen 17, 18 dargestellt, wobei ein positiv und negativ verformtes Formteil 10 dargestellt ist. Figur 7 zeigt die Ausgangslage nach einem Maschinenstop vergleichbar Figur 3 - der Transport der Folienbahn 5 beginnt. Zum Zeitpunkt E starten die beiden Spannrahmen 17, 18 mit der Geschwindigkeit V6, V7, noch bevor die Transporteinrichtung 4 ihre Fahrbewegung beendet hat. Gleichzeitig, oder um die Zeit X versetzt, starten die Formtische 11, 12 mit der Geschwindigkeit V2 bzw. V3, die identisch oder unterschiedlich sein kann. Es findet dadurch eine überschneidende Bewegung von Transporteinrichtung 4 und Spannrahmen 17, 18 während der Zeit Z und eine überschneidende Bewegung zwischen Spannrahmen 17, 18 und Formtischen 11, 12 während der Zeit P statt. Die zu ihrer Erreichung in der Steuerung der Thermoformmaschine erforderlichen Daten werden von einem Rechenprogramm unter Einbeziehung der Fahrgeschwindigkeiten V1, V2, V3, V6, V7, der Fahrwege und der Geometriedaten K1, K2, L, M, N des Formteils 10 berechnet, so dass sich, wie aus Figur 8 ersichtlich, die Kanten 19, 20 der Spannrahmen 17, 18 knapp am Formteil 10 vorbeibewegen und auch Teile von Oberwerkzeug 13 und Unterwerkzeug 14 das Formteil 10 und die Folienbahn 5 nicht berühren.
Eine optimaler Bewegungsablauf ist gegeben, wenn die in Figur 9 dargestellte Position erreicht wird. Mit dem Schließen der Spannrahmen 17, 18 findet eine Berührung der Folienbahn 5 durch die vorstehenden Bauteile von Oberwerkzeug 13 und Unterwerkzeug 14 statt, so dass sofort mit der Verformung begonnen werden kann. Figur 10 zeigt das Ende des Formvorgangs.

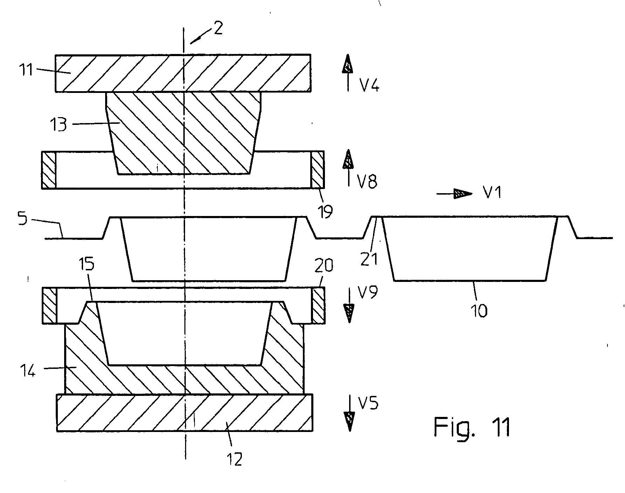

Nach dem Ausformen des Nutzens findet das Öffnen der Formstation 2 ebenfalls mit überschneidenden Bewegungen statt, wie aus den Figuren 6 und 9 ersichtlich. Zuerst starten zum Zeitpunkt B die Formtische 11, 12 und bewegen sich nach oben bzw. unten mit der Geschwindigkeit V4 bzw. V5. Um die Zeit X versetzt starten die Spannrahmen 17, 18 zum Zeitpunkt F mit der Geschwindigkeit V8 bzw. V9, wodurch eine Überschneidung der Bewegung von Spannrahmen 17, 18 und Formtischen 11, 12 während der Zeit O entsteht. Zum Zeitpunkt G, noch während der Fahrbewegung der Spannrahmen 17, 18, startet die Transporteinrichtung 4, so dass eine Überschneidung Q der Bewegungen von Spannrahmen 17, 18 und von der Transporteinrichtung 4 entsteht.
Die zur Errechnung einer optimalen Überschneidung O, Q in der Steuerung der Thermoformmaschine erforderlichen Daten werden von einem Rechenprogramm unter Einbeziehung der Fahrgeschwindigkeiten V1, V4, V5, V8, V9, der Fahrwege beteiligter Einrichtungen und der Geometriedaten K1, K2, L, M, N des Formteils 10 berechnet, sodass sich, wie aus Figur 11 ersichtlich, die Kanten der Spannrahmen 17, 18 und die Kanten 15 des Unterwerkzeuges 14 möglichst knapp am Formteil 10 vorbeibewegen.

Die Berechnung der von der Steuerung der Thermoformmaschine erforderlichen Daten zur Erzielung von optimalen Überschneidungen O, P, Q, R, W, Z und damit einer optimalen Taktzeit kann durch ein Rechenprogramm erfolgen, das in der Steuerung der Thermoformmaschine integriert ist. In diesem Fall werden die erforderlichen Geometriedaten K, K1, K2, L, M, N des Formteils 10 ins Bedienfeld der Steuerung eingegeben. Auch eine Eingabe durch Überspielen von CAD-Daten des Formteils 10 in die Steuerung der Thermoformmaschine ist möglich.
Es ist auch möglich, die Berechnung erforderlicher Daten über einen separaten Rechner vorzunehmen, in dem das Rechenprogramm gespeichert ist, und in den die Geometriedaten K, K1, K2, L, M, N des Formteils 10 oder die CAD-Daten des Formteils 10 eingegeben werden. Die von der Steuerung der Thermoformmaschine benötigten Daten werden dieser dann vom Rechner über ein Netzwerk oder über Datenträger zugeführt.

Wie schon erwähnt wird in der Regel die Formstation 2 die Taktzeit der Thermoformmaschine bestimmen, weil für den Formvorgang und für das Abkühlen des Formteils 10 relativ viel Zeit benötigt wird. Ausstanzen und Stapeln lassen sich rascher durchführen. Nur im Sonderfall könnte es sinnvoll sein, die Bewegungen von Transporteinrichtung 4 und bewegten Bauteilen dieser Einrichtungen in gleicher Weise überschneidend ablaufen zu lassen und die Überschneidung anhand der Geometriedaten des Formteils 10 zu berechnen.

Das Rechenprogramm zur Berechnung der Werte für die Herbeiführung der Überschneidungen O, P, Q, R, W, Z wird in der Praxis weitgehend optimierte Werte liefern, doch wird eine manuelle Anpassung in geringem Mass manchmal sinnvoll sein. In diesem Fall werden die vom Rechenprogramm berechneten und im Bedienfeld der Thermoformmaschine angezeigten Werte überschrieben und in die Steuerung übernommen.

Das erfindungsgemäße Verfahren lässt eine Weiterbildung in der Weise zu, dass, ausgehend von einem optimierten Bewegungsablauf, beispielsweise in der Formstation 2 und damit bei einer optimalen Taktzeit, die Bewegungsabläufe in der Stapelstation 8 optimal auf diese Taktzeit abgestimmt werden. Grund dafür ist die Erkenntnis, dass das Stapeln und die dafür erforderlichen Bewegungen nicht früher fertig sein müssen als es der optimierten Taktzeit der Formstation 2 entspricht. Folglich werden diese Bewegungsabläufe gegebenenfalls verlangsamt, um die ermittelte Taktzeit voll auszunutzen und durch die langsameren Bewegungsabläufe Bauteile zu schonen und Energie zu sparen sowie positive Auswirkungen auf den Stapelvorgang zu erreichen. Gleiche Auswirkungen können auf die Stanzstation vorgenommen werden, um beispielsweise eine langsamere Aufwärtsbewegung des Stanzwerkzeuges herbeizuführen.

### Bezugszeichenliste

| | | | |
|---|---|---|---|
| 1 | Gestell | A | Zeitpunkt: Start Formtische schließen |
| 2 | Formstation | B | Zeitpunkt: Start Formtische öffnen |
| 3 | Stanzstation | C | Zeitpunkt: Start Transporteinrichtung |
| 4 | Transporteinrichtung | D | Zeitpunkt: Formtische fahren, Transporteinr. fährt |
| 5 | Folienbahn | E | Zeitpunkt: Start Spannrahmen schließen |
| 6 | Rolle | F | Zeitpunkt: Start Spannrahmen öffnen |
| 7 | Heizeinrichtung | G | Zeitpunkt: Start Transporteinrichtung |
| 8 | Stapelstation | | |
| 9 | Behälterstapel | K | Höhe Formteil |
| 10 | Formteil | L | Vorschub Folienbahn |
| 11 | Formtisch oben | M | Formteil: Abstand Wand - Außenkante |
| 12 | Formtisch unten | N | Formteil: Abstand Wand - Außenkante |
| 13 | Oberwerkzeug | O | Überschneidung: Spannrahmen (Öffnungsbewegung) und Formtische fahren |
| 14 | Unterwerkzeug | P | Überschneidung: Spannrahmen und Formtische (Schließbewegung) fahren |
| 15 | Kante Formwerkzeug | Q | Überschneidung: Spannrahmen (Öffnungsbewegung) und Transporteinrichtung fahren |
| 16 | Außenkante Nutzen | R | Überschneidung: Transporteinrichtung und Formtische (Schließbewegung) fahren |
| 17 | Spannrahmen oben | S | Zeit, in der Formtische alleine fahren |
| 18 | Spannrahmen unten | T | Zeit zwischen Start Formtische und Druckluft- und/oder Vakuumzufuhr |
| 19 | Kante Spannrahmen | U | Zeit zwischen Start Formtische und Start Transporteinrichtung |
| 20 | Kante Spannrahmen | V1 | Transportgeschwindigkeit der Transporteinrichtung |
| 21 | Restfolie | V2 | Schließgeschwindigkeit Formtisch oben |
| | | V3 | Schließgeschwindigkeit Formtisch unten |
| | | V4 | Öffnungsgeschwindigkeit Formtisch oben |
| | | V5 | Öffnungsgeschwindigkeit Formtisch unten |
| | | V6 | Schließgeschwindigkeit Spannrahmen oben |
| | | V7 | Schließgeschwindigkeit Spannrahmen unten |
| | | V8 | Öffnungsgeschwindigkeit Spannrahmen oben |
| | | V9 | Öffnungsgeschwindigkeit Spannrahmen unten |
| | | | |
| | | W | Überschneidung: Transporteinrichtung und Formtische (Öffnungsbewegung) fahren |
| | | X | Zeit zwischen Start Spannrahmen und Start Formtische |
| | | Y | Überschneidung: Formluftzufuhr und Formtische (Schließbewegung) fahren |
| | | Z | Überschneidung: Transporteinrichtung und Spannrahmen (Schließbewegung) fahren |

## Patentansprüche

1. Verfahren zum Optimieren der Taktzeit einer Thermoformmaschine zum Tiefziehen von Formteilen (10) aus einer erwärmten thermoplastischen Folienbahn (5), mit einer Transporteinrichtung (4) für die Folienbahn (5) und Bearbeitungsstationen mit mindestens einer Einrichtung (11, 12, 17, 19), die verschiebbar zur Folienbahn (5) ausgebildet ist, wobei die mindestens eine Bewegung dieser Einrichtung (11, 12, 17, 19) überschneidend zur Bewegung der Transporteinrichtung (4) und/oder zu Bewegungen von Einrichtungen anderer Bearbeitungsstationen der Thermoformmaschine ablaufen, **dadurch gekennzeichnet, dass** die Geometriedaten (K, K1, K2, L, M, N) des Formteils (10) durch Eingabe oder Übernahme von CAD-Daten des Formteils (10) in das Rechenprogramm eingegeben werden und die Steuerung der Thermoformmaschine unter Einbeziehung der Fahrgeschwindigkeiten (V1 bis V9) und Fahrwege der zu bewegenden Einrichtungen (11, 12, 17, 19) und der Transporteinrichtung (4), eine optimierte Überschneidung (O, P, Q, R, W, Z) berechnet.

2. Verfahren nach Anspruch 1, **dadurch gekennzeichnet, dass** das Rechenprogramm zur Berechnung der erforderlichen Werte zum Herbeiführen einer Überschneidung (O, P, Q, R, W, Z) in der Steuerung der Thermoformmaschine hinterlegt ist und die Geometriedaten (K, K1, K2, L, M, N) des Formteils (10) direkt in diese eingegeben werden.

3. Verfahren nach Anspruch 1, **dadurch gekennzeichnet, dass** das Rechenprogramm zur Berechnung der erforderlichen Werte zum Herbeiführen der Überschneidung (O, P, Q, R, W, Z) in einem von der Steuerung der Thermoformmaschine getrennten Rechner hinterlegt ist und die Geometriedaten (K, K1, K2, L, M, N) des Formteils (10) in den Rechner eingegeben und die berechneten Werte an die Steuerung der Thermoformmaschine übergeben werden.

4. Verfahren nach Anspruch 3, **dadurch gekennzeichnet, dass** die Übergabe von errechneten Werten mittels Datenträger erfolgt.

5. Verfahren nach Anspruch 3, **dadurch gekennzeichnet, dass** die Übergabe von errechneten Werten über ein Netzwerk erfolgt.

6. Verfahren nach einem der Ansprüche 1 bis 5, **dadurch gekennzeichnet, dass** eine Überschneidung (Y) zwischen der Fahrbewegung der Formtische (11, 12) und dem Zuschalten der Formluft und/oder des Vakuums zum Formen des Formteils (10) besteht.

7. Verfahren nach einem der Ansprüche 1 bis 6, **dadurch gekennzeichnet, dass** die Bewegungsabläufe von Bearbeitungsstationen (2, 3, 8) so aufeinander abgestimmt werden, dass alle Bewegungsabläufe zum selben Zeitpunkt beendet sind.

## Claims

1. A method for optimising the cycle time of a thermoforming machine for the deep-drawing of formed pieces (10) from a heated thermoplastic film web (5), with a transport device (4) for the film web (5) and processing stations with at least one device (11, 12, 17, 19) which is constituted displaceable with respect to the film web (5), wherein the at least one movement of this device (11, 12, 17, 19) occurs in an intersecting manner with the movement of the transport device (4) and all the movements of the devices of other processing stations of the thermoforming machine, **characterised in that** the geometrical data (K, K1, K2, L, M, N) of the formed piece (10) are inputted into the computer program by inputting or accepting CAD data of the formed piece (10) and the control system of the thermoforming machine calculates an optimised intersection (O, P, Q, R, W, Z) using the travel speeds (V1 to V9) and travel paths of the devices (11, 12, 17, 19) to be moved and the transport device (4).

2. The method according to claim 1, **characterised in that** the computer program for calculating the required values for bringing about the intersection (O, P, Q, R, W, Z) is stored in the control system of the thermoforming machine and the geometrical data (K, K1, K2, L, M, N) of the formed piece (10) are directly inputted into the latter.

3. The method according to claim 1, **characterised in that** the computer program for calculating the required values for bringing about the intersection (O, P, Q, R, W, Z) is stored in a computer separate from the control system of the thermoforming machine and the geometrical data (K, K1, K2, L, M, N) of the formed piece (10) are inputted into the computer and the calculated values are transferred to the control system of the thermoforming machine.

4. The method according to claim 3, **characterised in that** the transfer of the calculated values takes place by means of data carriers.

5. The method according to claim 3, **characterised in that** the transfer of calculated values takes place via a network.

6. The method according to any one of claims 1 to 5, **characterised in that** an intersection (Y) exists between the travel movement of the forming tables (11, 12) and the switching-on of the forming air and/or of the vacuum for forming the formed piece (10).

7. The method according to any one of claims 1 to 6, **characterised in that** the movement sequences of processing stations (2, 3, 8) are coordinated with one another in such a way that all the movement sequences are completed at the same time.

## Revendications

1. Procédé pour optimiser la durée de cycle d'une machine de thermoformage pour l'emboutissage profond de pièces moulées (10) à partir d'une bande de feuille (5) thermoplastique chauffée comprenant un système de transport (4) pour la bande de feuille (5) et les stations d'usinage comprenant au moins un dispositif (11, 12, 17, 19), lequel est conçu de façon coulissante par rapport à la bande de feuille (5), le au moins un déplacement de ce dispositif (11, 12, 17, 19) se déroulant de façon superposée par rapport au mouvement du système de transport (4) et/ou à des mouvements de systèmes d'autre stations d'usinage de la machine de thermoformage, **caractérisé en ce que** les données de géométrie (K, K1, K2,L, M, N) de la pièce moulée (10) sont entrées par l'entrée ou la prise en charge de données CAO de la pièce moulée (10) dans le programme de calcul et la commande de la machine de thermoformage calcule une superposition (O, P, Q, W, Z) optimisée en tenant compte des vitesses de déplacement (V1 à V9) et des chemins de déplacement des systèmes (11, 12, 17, 19) à déplacer et du système de transport (4).

2. Procédé selon la revendication 1, **caractérisé en ce que** le programme de calcul destiné au calcul des valeurs nécessaires pour entraîner une superposition (O, P, Q, R, W, Z) est déposé dans la commande de la machine de thermoformage et les données de géométrie (K, K1, K2, L, M, N) de la pièce moulée (10) sont entrées directement dans cette commande.

3. Procédé selon la revendication 1, **caractérisé en ce que** le programme de calcul destiné au calcul des valeurs nécessaires pour entrainer la superposition (O, P, Q, R, W, Z) est déposé dans un calculateur séparé de la commande de la machine de thermoformage et les données de géométrie (K, K1, K2, L, M, N) de la pièce moulée (10) sont entrées dans le calculateur et les valeurs calculées sont transmises à la commande de la machine thermoformage.

4. Procédé selon la revendication 3, **caractérisé en ce que** le transfert de valeurs calculées s'effectue au moyen de supports de données.

5. Procédé selon la revendication 3, **caractérisé en ce que** le transfert de valeurs calculées s'effectue par un réseau.

6. Procédé selon l'une des revendications 1 à 5, **caractérisé en ce qu'**une superposition (Y) existe entre le mouvement de translation des tables de moulage (11, 12) et la mise en circuit de l'air de formage et/ou du vide pour le formage de la pièce moulée (10).

7. Procédé selon l'une des revendications 1 à 6, **caractérisé en ce que** les déroulements de mouvement de stations d'usage (2, 3, 8) sont adaptés les uns aux autres de telle sorte que tous les déroulements de mouvement sont achevés au même moment.
